# EUROPÄISCHE PATENTSCHRIFT

(11) **EP 1 243 228 B1**
(45) Veröffentlichungstag und Bekanntmachung des Hinweises auf die Patenterteilung: **12.11.2003**
(21) Anmeldenummer: 01112247.0
(22) Anmeldetag: 18.05.2001
(51) Int. Cl.: A61C 3/06, A61C 3/12

(54) **Dentalwerkzeug**
Dental tool
Instrument dentaire

(30) Priorität: 27.02.2001 DE 10109321
(43) Veröffentlichungstag der Anmeldung: 25.09.2002
(73) Patentinhaber: EDENTA AG, 9434 Au (CH)
(72) Erfinder: Grätz, Dieter, c/o Edenta AG Dentalprodukte, 9434 Au, SG (CH)
(74) Vertreter: Liesegang, Roland, Dr.-Ing.

(56) Entgegenhaltungen:
- EP-A- 0 074 331
- EP-A- 0 354 870
- EP-A- 0 962 192
- WO-A-99/08617
- CH-A- 117 888
- US-A- 4 187 082
- US-A- 4 592 729
- US-A- 5 505 617

## Beschreibung

Die Erfindung betrifft ein Dentalwerkzeug zum Abarbeiten von Zahn- und/oder Füllmaterial in Gestalt eines Streifens.

Bei Beschädigungen von Zähnen, die durch Karies, Unfall- oder Gewalteinwirkung verursacht sind, werden die entstandenen Kavitäten mit Füllmaterial aufgefüllt. Anschließend ist das Füllmaterial nachzuarbeiten und schließlich die Oberfläche des Füllmaterials möglichst glatt zu gestalten, weil eine rauhe Oberfläche Retentionsstellen für Bakterien bilden würde.

Die für eine glättende Bearbeitung des Zahnmaterials üblichen Rotationswerkzeuge reichen nur beschränkt in den Spalt zwischen zwei Zähnen. Damit jedoch eine glatte Oberfläche auch in diesem sogenannten Interdentalraum geschaffen werden kann, werden üblicherweise Metallstreifen herangezogen. In einem ersten Behandlungsschritt wird ein Streifen mit einer Sägeverzahnung verwendet, um zwischen dem Zahn mit der Füllung und dem Nachbarzahn einen Spalt zu schaffen. In einem zweiten Behandlungsschritt wird ein Streifen mit einer Diamantierung verwendet. Durch Hin- und Herziehen des Diamantierungsstreifens in dem Spalt wird die Oberfläche des Zahn- und/oder Füllungsmaterials geglättet. Hierbei können mehrere Metallstreifen mit unterschiedlicher Diamantierungskörnung in Betracht kommen, um die gewünschte glatte Oberflächenstruktur zu erlangen.

Mit dem Wechsel der jeweiligen, für einen bestimmten Behandlungsschritt vorgesehenen Dentalstreifen besteht allerdings die Gefahr, dass sich die Streifen beim Einführen und Entfernen verhaken oder verklemmen, wobei unter Umständen dem zu behandelnden Patienten Verletzungen zugefügt werden.

Dokument US 5 505 617 offenbart einen dentalen Streifen, der auf einer Fläche eine Diamantierung und an einer Kante eine Verzahnung aufweist.

Es ist Aufgabe der Erfindung, ein Dentalwerkzeug zu schaffen, mit welchem eine gegenüber den bekannten Dentalwerkzeugen zügigere und sicherere Behandlung des Interdentalraums zweier Zähne erreicht werden kann.

Diese Aufgabe wird durch Anspruch 1 gelöst.

Bei dem erfindungsgemäßen Dentalwerkzeug sind die einen Spalt erzeugende Sägeverzahnung sowie die für die Glättung der Oberfläche vorgesehene Diamantierung in einem einzigen Werkzeug vereinigt. Dies vereinfacht das verletzungsfreie Herstellen von glatten Flächen im Interdentalraum.

Ein bevorzugtes Dentalwerkzeug gemäß der vorliegenden Erfindung kann einen ersten sowie einen zweiten Diamantierungsabschnitt auf der oder den Seitenflächen des Streifens umfassen, die durch einen Verzahnungsabschnitt getrennt sind. Die Verzahnung erstreckt sich vorzugsweise nur über die Länge des Verzahnungsabschnittes, d. h. über die Länge des die beiden Diamantierungsabschnitte trennenden Zwischenbereiches des Streifens. Die Verzahnung kann sich jedoch auch über die gesamte Länge des Streifens erstrecken, wobei sie in der erstgenannten Variante bevorzugt diamantierungsfrei ist.

Die Kanten des Streifens sind vorzugsweise nicht diamantiert. Dies ermöglicht eine Herstellung der Streifen aus einem bereits diamantierten Metallband durch Schneiden, beispielsweise mittels eines Lasers.

Die Diamantierung kann in verschiedenen Diamantierungsabschnitten unterschiedliche Diamantierungskörnungen im Bereich zwischen 8 und 150 µm Korndurchmesser aufweisen.

Mit einem Dentalwerkzeug nach der Erfindung, das außer einer Diamantierung auf den Seitenflächen eine Verzahnung längs einer Kante hat, wird beispielsweise wie folgt gearbeitet: Der Streifen wird in den Zahnspalt zwischen zwei Zähnen mit der verzahnten Kante voraus eingeführt. Durch eine Sägebewegung wird Füllungs- bzw. Zahnmaterial aus dem Spalt geräumt. Dann wird der Streifen aus dem Zahnspalt herausgenommen und um 180° gedreht wieder eingeführt, so daß die Verzahnung vom Grund des Zahnspaltes wegweist. Mit den diamantierten Seitenflächenabschnitten des Streifens werden nun die Spaltseitenflächen durch Hin- und Herziehen des Streifens durch den Interdentalraum unter Ausüben sanften seitlichen Druckes geschliffen und somit geglättet.

Weitere vorteilhafte Ausgestaltungen der Erfindung sind in den Unteransprüchen angegeben. Die Erfindung ist im folgenden anhand schematischer Zeichnungen an Ausführungsbeispielen mit weiteren Einzelheiten näher erläutert. Es zeigen:
- Fig. 1: eine Draufsicht auf eine erste Ausführung eines Dentalwerkzeugs gemäß der vorliegenden Erfindung;
- Fig. 2: eine Teil-Seitenansicht auf die Ausführung nach Fig. 1;
- Fig. 3: eine Draufsicht auf eine weitere Ausführung des Dentalwerkzeugs gemäß der Erfindung; und
- Fig. 4: eine Teil-Seitenansicht auf die Ausführung nach Fig. 3.

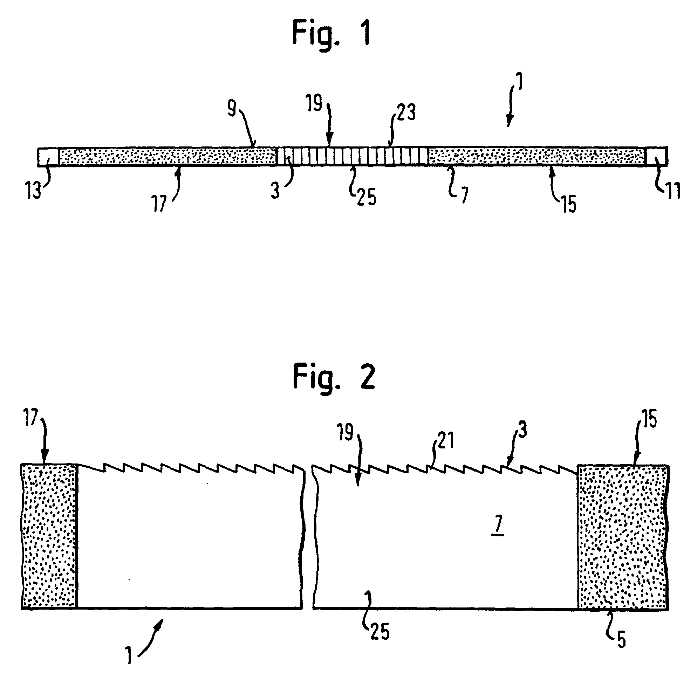

Das in Fig. 1 und 2 dargestellte Dentalwerkzeug 1 besteht aus einem Streifen aus einem harten, korrosionsfesten Metall, z. B. Edelstahl, Titan oder dgl. mit zwei zueinander parallelen Kanten 3, 5 und zwei parallelen Seitenflächen 7, 9.

Das Dentalwerkzeug 1 umfasst an seinen beiden freien Enden je einen Greifabschnitt 11, 13 zum sicheren Greifen und Handhaben des Dentalwerkzeugs 1, einen ersten und einen zweiten Diamantierungsabschnitt 15, 17, der jeweils eine Diamantierung an einer oder beiden Seitenflächen 7, 9 des Streifens aufweist; und einen dazwischen liegenden diamantierungsfreien Verzahnungsabschnitt 19, der an einer Kante 3 eine Verzahnung 21 aufweist.

Der Verzahnungsabschnitt 19 umfasst zwei glatte, d. h. diamantierungsfreie Seitenflächenabschnitte 23, 25, wobei die Seitenflächenabschnitte 23, 25 von den Diamantierungsabschnitten 15, 17 seitlich begrenzt sind. An einer Kante des Verzahnungsabschnittes erstreckt sich zwischen den Diamantierungsabschnitten 15, 17 eine Sägeverzahnung 21. Die Sägeverzahnung 21 ist nicht diamantiert.

Aufgrund der diamantierungsfreien Flächen 23,25 des Verzahnungsabschnitts 19 ist das Arbeiten mit dem Dentalwerkzeug 1 einfach, weil der Streifen 1 beim Sägen nicht seitlich an den Zähnen des Patienten hängen bleiben sondern ohne Hemmung hin und her gleiten kann. Zudem kann der Streifen 1 im Bereich des Verzahnungsabschnitts 19 ohne weiteres in die Lücke zwischen zwei Zähnen eingeführt und daraus wieder entfernt werden, ohne daß der Streifen sich an den Zahnflanken verhakt.

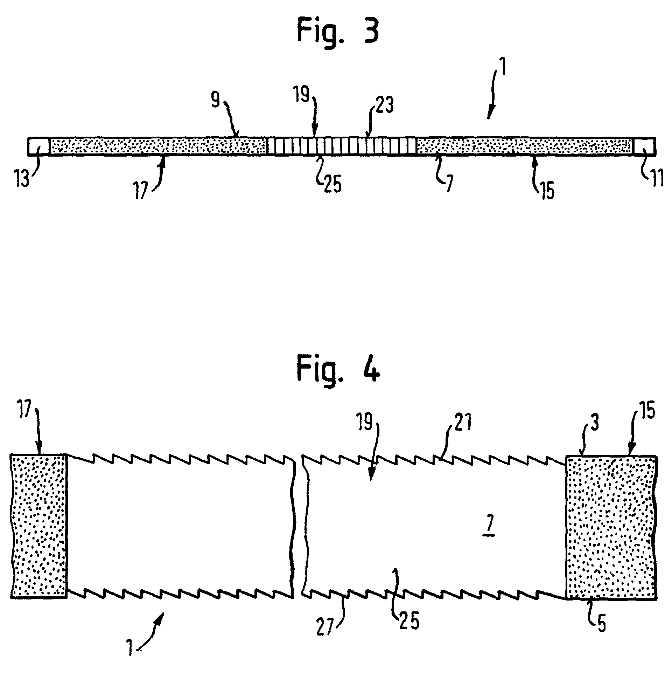

Bei der Ausführung nach den Fig. 3 und 4 sind identische oder funktionsgleiche Bestandteile des Dentalwerkzeugs mit denselben Bezugsziffern versehen und nicht nochmals beschrieben. Bei dem Dentalwerkzeug nach den Fig. 3 und 4 ist auch an der zweiten Längskante 5 eine Sägeverzahnung 27 vorgesehen. Hierbei kann die Sägeverzahnung 27 eine gegenüber der Sägeverzahnung 21 feinere Zahnung aulweisen oder umgekehrt.

In der Praxis kann ein solches Dentalwerkzeug eine Länge von 8 mm bis 500 mm, vorzugsweise 5 bis 100 mm, eine Breite von 1 mm bis 20 mm und eine Stärke von 0,01 mm bis 1,0 mm aufweisen. Die Diamantierungsabschnitte 15, 17 können mit unterschiedlichen Diamantierungskörnungen versehen sein. Ein mittlerer Korndurchmesser liegt im Bereich von 8 µm bis 150 µm.

## Patentansprüche

1. Dentalwerkzeug zum Abarbeiten von Zahn- und/oder Füllmaterial in Gestalt eines Streifens, der zumindest auf einer Seitenfläche (15,17) einen Diamantierungsabschnitt und einen von einer Diamantierung freien Abschnitt (23,25) sowie an zumindest einer Kante eine Verzahnung (21,27) aufweist, **dadurch gekennzeichnet, dass** die Verzahnung über die Länge des von der Diamantierung freien Abschnitts (23,25) reicht.

2. Dentalwerkzeug nach Anspruch 1, **dadurch gekennzeichnet, daß** zwei Diamantierungsabschnitte (15,17) und dazwischen der von der Diamantierung freie Abschnitt (23,25) vorgesehen sind.

3. Dentalwerkzeug nach Anspruch 1 oder 2, **dadurch gekennzeichnet, daß** die Verzahnung (21,27) sich nur über die Länge des von der Diamantierung freien Abschnittes (23,25) erstreckt.

4. Dentalwerkzeug nach einem der Ansprüche 1 bis 3, **dadurch gekennzeichnet, daß** die Kanten des Streifens frei von einer Diamantierung sind.

5. Dentalwerkzeug nach einem der Ansprüche 1 bis 4, **dadurch gekennzeichnet, daß** die Verzahnung (21, 27) frei von einer Diamantierung ist.

6. Dentalwerkzeug nach einem der Ansprüche 1 bis 5, **dadurch gekennzeichnet, daß** die Diamantierungsabschnitte (15,17) mit jeweils unterschiedlichen Diamantierungskörnungen versehen sind.

7. Dentalwerkzeug nach einem der Ansprüche 1 bis 6, **dadurch gekennzeichnet, daß** der mittlere Durchmesser eines Diamantierungskornes zwischen 8 µm und 150 µm liegt.

8. Dentalwerkzeug nach einem der Ansprüche 1 bis 7, **dadurch gekennzeichnet, daß** die Länge des Streifens im Bereich von 5 bis 100 mm liegt.

## Claims

1. Dental tool for the abrasion of tooth and/or filling material in the form of a strip, which at least on a surface (15, 17) thereof has a diamond coating portion and a diamond coating-free portion (23, 25) and on at least an edge thereof a tooth system (21, 27) **characterized in that** the sawtooth system extends over the length of the diamond coating-free lateral face portion.

2. Dental tool according to claim 1, **characterized in that** two diamond coating portions and between them the diamond coating-free portion are provided.

3. Dental tool according to claim 1 or 2, **characterized in that** the tooth system (21, 27) extends only over the length of the diamond coating-free portion (23, 25).

4. Dental tool according to one of claims 1 to 3, **characterized in that** the edges of the strip are free from a diamond coating.

5. Dental tool according to one of claims 1 to 4, **characterized in that** the tooth system (21, 27) is free from a diamond coating.

6. Dental tool according to one of claims 1 to 5, **characterized in that** the diamond coating portions (15, 17) are provided each with different diamond coating grain sizes.

7. Dental tool according to one of claims 1 to 6, **characterized in that** the average diameter of a diamond coating grain is between 8 µm and 150 µm.

8. Dental tool according to one of claims 1 to 7, wherein the strip length is between 5 and 100 mm.

## Revendications

1. Instrument dentaire pour le polissage de dents et/ou de matériau d'obturation de dents sous la forme d'une bande, qui présente au moins sur une face latérale (15, 17) une partie diamantée et une partie non diamantée (23, 25) ainsi qu'une denture (21, 27) sur au moins une arête, **caractérisé en ce que** la denture s'étend sur la longueur de la partie non diamantée (23, 25).

2. Instrument dentaire suivant la revendication 1, **caractérisé en ce que** deux parties diamantées (15, 17) et une partie non diamantée (23, 25) entre celles-ci sont prévues.

3. Instrument dentaire suivant la revendication 1 ou 2, **caractérisé en ce que** la denture (21, 27) s'étend seulement sur la longueur de la partie non diamantée (23, 25).

4. Instrument dentaire suivant l'une des revendications 1 à 3, **caractérisé en ce que** les arêtes de la bande sont non diamantées.

5. Instrument dentaire suivant l'une des revendications 1 à 4, **caractérisé en ce que** la denture (21, 27) est non diamantée.

6. Instrument dentaire suivant l'une des revendications 1 à 5, **caractérisé en ce que** les parties. diamantées (15, 17) sont diamantées avec des granulométries respectivement différentes.

7. Instrument dentaire suivant l'une des revendications 1 à 6, **caractérisé en ce que** le diamètre moyen d'un grain de diamant est compris entre 8 µm et 150 µm.

8. Instrument dentaire suivant l'une des revendications 1 à 7, **caractérisé en ce que** la longueur de la bande se situe entre 5 et 100 mm.
